# EUROPÄISCHE PATENTSCHRIFT

(11) **EP 1 181 178 B1**
(45) Veröffentlichungstag und Bekanntmachung des Hinweises auf die Patenterteilung: **31.03.2004**
(21) Anmeldenummer: 00925284.2
(22) Anmeldetag: 13.05.2000
(51) Int. Cl.: B60T 1/06, B60K 17/04

(54) **RADANTRIEB FÜR EIN MOBILFAHRZEUG**
FINAL DRIVE FOR A MOBILE VEHICLE
ENTRAINEMENT DE ROUE POUR VEHICULE MOBILE

(30) Priorität: 18.05.1999 DE 19922651
(43) Veröffentlichungstag der Anmeldung: 27.02.2002
(73) Patentinhaber: ZF FRIEDRICHSHAFEN Aktiengesellschaft, 88038 Friedrichshafen (DE)
(72) Erfinder: PAULI, Robert, D-94121 Salzweg (DE); SOLKA, Ulrich, D-94081 Fürstenzell (DE); SALG, Ditmar, D-94121 Salzweg (DE)
(86) Internationale Anmeldenummer: PCT/EP2000/004331
(87) Internationale Veröffentlichungsnummer: WO 2000/069695

(56) Entgegenhaltungen:
- EP-A- 0 208 288
- WO-A-80/02821
- WO-A-83/03124
- WO-A-88/02324
- DE-A- 4 206 101

## Beschreibung

Radantriebe, welche einzelne Räder von mobilen Fahrzeugen angetreiben, werden häufig in land- und forstwirtschaftlichen Fahrzeugen sowie Fahrzeugen, wie Arbeitsmaschinen, eingesetzt. Bei diesen Fahrzeugen, vor allem bei Mähdreschern, werden Radantriebe, welche die einzelnen Antriebsräder antreiben, benötigt, welche möglichst wenig Bauraum in Richtung Fahrzeugmitte benötigen, da bei diesen Fahrzeugen dort Transport- und Drescheinrichtungen angeordnet sind. Da die oben genannten Fahrzeuge häufig abseits von befestigten Fahrwegen eingesetzt werden, ist es erforderlich, bei der Lenkeinrichtung des Radantriebs die Lenkkräfte niedrig zu halten. Die Radantriebe der Fahrzeuge benötigen zum Abbremsen des Fahrzeugs eine Betriebsbremse sowie eine Feststellbremse, welche das Fahrzeug selbständig im abgebremsten Zustand hält. Bei einem Defekt des Antriebsmotors oder hydraulischer Einrichtungen sollte das Fahrzeug selbsttätig abbremsen. Der Antrieb sollte einerseits in eine Felge einbaubar sein und andererseits nicht zu weit in Richtung Fahrzeugmitte hineinragen.

Aus der DE 42 06 101 A1 ist ein Radantrieb bekannt, bei welchem ein integrierter hydrostatischer Motor eine innere Zentralwelle einer ersten Planetenstufe antreibt, bei welcher das Hohlrad feststeht und der Steg ein inneres Zentralrad einer zweiten Planetenstufe antreibt, bei welcher das Hohlrad feststeht und der Steg den Abtrieb bildet. Dieser Antrieb weist keine Feststellbremse auf und die Radlagerung ist über der zweiten Planetenstufe angeordnet, so daß dieser Antrieb nicht in die Felge eingeschoben werden kann. Bei diesem Antrieb handelt es sich um einen Antrieb für nicht gelenkte Antriebsräder.

Der vorliegenden Erfindung liegt die Aufgabe zugrunde, einen Radantrieb zu schaffen, welcher sich durch eine kompakte Bauform auszeichnet, eine Betriebs- und Feststellbremse aufweist sowie geringe Lenkkräfte benötigt.

Die Aufgabe wird mit einem, auch die kennzeichnenden Merkmale des Hauptanspruchs aufweisenden, gattungsgemäßen Radantrieb gelöst.

Erfindungsgemäß besteht der Radantrieb aus einem Antriebsmotor, vorzugsweise einem hydrostatischen Motor oder einem elektrischen Motor, welcher ein inneres Zentralrad einer ersten Planetenstufe antreibt, deren Hohlrad drehfest gelagert ist und deren Steg ein inneres Zentralrad einer zweiten Planetenstufe antreibt, deren Hohlrad drehfest gelagert ist und deren Steg den Abtrieb bildet. Die Bremslamellen der Betriebs- und Feststellbremse sind einerseits auf dem Planetenträger der ersten Planetenstufe und andererseits in einem drehfesten Teil, welches mit den beiden Hohlrädern in Verbindung steht, angeordnet. Durch die Untersetzung mit zwei Planetenstufen kann ein sehr kleiner und kompakter Antriebsmotor verwendet werden. Indem sich die Bremslamellen zwischen den zwei Planetenstufen befinden und die Innenlamellen mit dem Planetenträger der ersten Planetenstufe in Verbindung stehen, ist es möglich, eine Bremse zu verwenden, bei welcher das Drehmoment des Abtriebs durch die zweite Planetenstufe reduziert wird und dadurch die Bremse kompakter ausgeführt werden kann und die hohe Antriebsdrehzahl des Antriebsmotors durch die erste Planetenstufe reduziert wird und dadurch die Ölreibungsund -scherverluste zwischen den Lamellen ebenfalls reduziert werden. Die Betätigungseinrichtung der Bremse betätigt die Bremse in drucklosem Zustand, d. h., wenn der Antriebsmotor der Druckmittelquelle steht oder wenn alle Druckzuführungen zu der Betätigungseinrichtung drucklos geschaltet sind, als Feststellbremse und betätigt die Bremse, wenn die Feststellbremse über Druckbeaufschlagung gelöst ist und die Betätigungseinrichtung der Betriebsbremse mit Druck beaufschlagt wird. Mit der Betriebsbremse kann, je nach Höhe der Druckbeaufschlagung, das Bremsmoment gesteuert werden. Es besteht jedoch auch die Möglichkeit, durch Druckbeaufschlagung der Betätigungseinrichtung der Feststellbremse die Bremse zu lösen und das Fahrzeug durch geregeltes oder gesteuertes Reduzieren des Druckes in der Betätigungseinrichtung der Feststellbremse dynamisch abzubremsen. Somit kann das Fahrzeug entweder bei gelöster Feststellbremse durch geregeltes oder gesteuertes Druckbeaufschlagen der Betriebsbremse dynamisch abgebremst werden oder durch geregeltes oder gesteuertes Reduzieren des Drukkes in der Betätigungseinrichtung der Feststellbremse dynamisch abgebremst werden. Indem die Betätigungseinrichtung der Betriebsbremse und die Betätigungseinrichtung der Feststellbremse in einem Bauteil angeordnet sind und sich dieses Bauteil oberhalb der ersten Planetenstufe, jedoch innerhalb der radialen Begrenzung der zweiten Planetenstufe befindet, kann eine sehr kompakte Bauweise des Antriebs geschaffen werden. Die Radlagerung sowie die Anflanschfläche der Felge oder eines anderen Rades befindet sich in axialer Richtung neben den zwei Planetenstufen und der Betätigungseinrichtung der Bremse. Hierdurch wird der Abstand der Anflanschfläche der Felge zur Lenkdrehachse reduziert und dadurch die Lenkkräfte reduziert. Indem die Krafteinleitung der Radkraft ohne größeren Hebelarm, hervorgerufen durch einen Abstand der Felgenanflanschfläche zur Radlagerung, erfolgt und sich die Radlagerung neben der Betätigungseinrichtung und den zwei Planetenstufen befindet, ist es möglich, den Durchmesser der Radlagerung sehr gering auszubilden, so daß die zwei Planetenstufen und die Betätigungseinrichtung der Bremse in die Felge eingeschoben werden können. Indem ein Teil des Radantriebs in die Felge eingeschoben wird, wird erreicht, daß der Radantrieb einen geringen Bauraum in Richtung Fahrzeugmitte benötigt. Die Hohlräder der beiden Planetenstufen sowie die Betätigungseinrichtung der Bremse und der Träger der Außenlamellen stehen miteinander in Verbindung und werden mit einer gemeinsamen Befestigungseinrichtung drehfest mit einem Flansch verbunden, welcher mit dem Fahrzeug in Verbindung steht. Dadurch wird die Anzahl der Verbindungselemente reduziert. Indem die zwei Planetenstufen die Bremse und die Betätigungseinrichtung der Bremse in die Felge eingeschoben werden, kann der Abstand der Felgenanflanschfläche zur Lenkdrehachse gering ausgeführt werden, welches zu geringen Lenkkräften führt. Der Antriebsmotor ist angeflanscht und steht mit dem inneren Zentralrad der ersten Planetenstufe in Verbindung. Dadurch ist es möglich, einen Standardmotor zu verwenden, welcher nicht aufwendig integriert werden muß. Da die Betriebs- und Feststellbremse der zweiten Planetenstufe vorgeschaltet ist und die Feststellbremse bei einem Ausfall der Hydraulik automatisch schließt, ist das Fahrzeug bei einem Defekt der Hydraulik blockiert. Um das Fahrzeug abschleppen zu können, besteht einerseits die Möglichkeit, mit einer externen Druckmittelquelle die Feststellbremse zu lösen und danach das Fahrzeug abzuschleppen. Eine weitere Möglichkeit bietet sich, indem das innere Zentralrad der zweiten Planetenstufe axial verschoben wird und somit die Verzahnung des inneren Zentralrades der zweiten Planetenstufe außer Eingriff gebracht wird, so daß der Kraftfluß zwischen Bremse und zweiter Planetenstufe unterbrochen wird, so daß das Fahrzeug abgeschleppt werden kann. Um den Leistungsfluß auf die Verzahnung des zweiten inneren Zentralrades zu trennen ist es notwendig, das innere Zentralrad der zweiten Planetenstufe in axialer Richtung zu verschieben. Hierbei soll vorzugsweise der Radantrieb nicht geöffnet werden, damit während des Verschiebevorgangs kein Schmutz in den Radantrieb gelangen kann. Indem das Zentralrad der zweiten Planetenstufe vorzugsweise mit einer Schraube, welche in dem Planetenträger der zweiten Planetenstufe angeordnet ist, in Verbindung steht, und eine Mitnahmeverzahnung aufweist, welche in ihrem Durchmesser größer ist als die radiale Erstreckung des inneren Zentralrades der zweiten Planetenstufe und somit eine geringe axiale Erstreckung aufweist, ist es möglich durch drehen der Schraube, die Schraube und somit das innere Zentralrad und deren Mitnahmeverzahnung axial zu verschieben und innerhalb des axialen Weges des Gewindes der Schraube den Leistungsfluß zu trennen, ohne daß der Radantrieb geöffnet wird und Schmierflüssigkeit austreten kann.

Besitzt ein Fahrzeug mehr als zwei mit hydrostatischen Motoren angetriebene Räder, besteht die Möglichkeit, zwei Radantriebe mit der Betriebsbremse und/oder ein oder zwei Radantriebe nur mit der Feststellbremse auszuführen, da bei Verwendung von hydrostatischen Motoren als Antriebsmotoren diese als Hilfsbremsen für die Betriebsbremse eingesetzt werden können und das Fahrzeug auch ohne Betriebsbremse über die hydrostatischen Motoren abgebremst werden kann. Weitere Ausgestaltungsmöglichkeiten sind der Figuren-Beschreibung zu entnehmen.

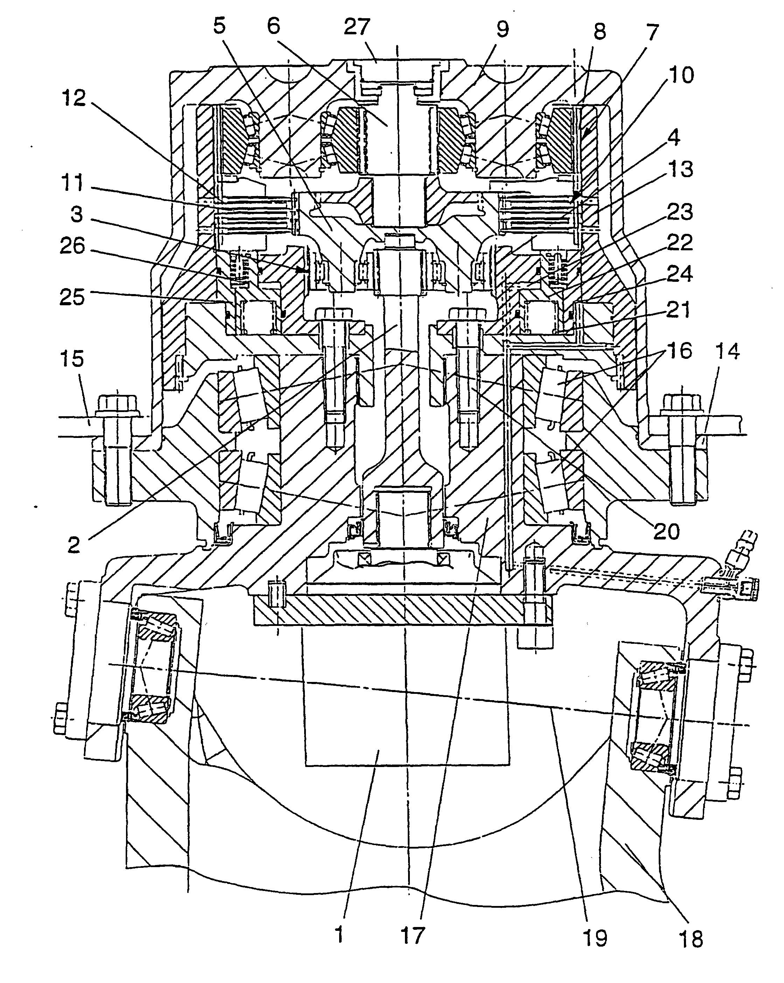

Die einzige Figur zeigt einen Radantrieb, bei welchem ein Antriebsmotor 1 ein inneres Zentralrad 2 einer ersten Planetenstufe 3 antreibt, bei welcher das Hohlrad 4 drehfest gehalten ist und der Planetenträger 5 ein inneres Zentralrad 6 einer zweiten Planetenstufe 7 antreibt, deren Hohlrad 8 drehfest gehalten ist und deren Planetenträger 9 den Abtrieb bildet. Zwischen der ersten Planetenstufe 3 und der zweiten Planetenstufe 7 befindet sich eine Bremse 10, deren Innenlamellen 11 auf dem Planetenträger 5 und deren Außenlamellen 12 auf einer Hülse 13 angeordnet sind, auf welcher ebenfalls das Hohlrad 8 und die Betätigungseinrichtung der Bremse 10 angeordnet sind. Das Hohlrad 4 steht mit der Hülse 13 in Verbindung. Die Hülse 13, das Hohlrad 8 und die Betätigungseinrichtung der Bremse 10 können einteilig oder aus mehreren Teilen aufgebaut sein. Die Anflanschfläche 14 der Felge 15 befindet sich im axialen Bereich der Lagerung 16, welche die Radkraft über einen Nabenträger 17 an das Fahrzeug weitergibt. Der Nabenträger 17 ist lenkbar auf einem Achsrohr 18 angeordnet. Der Antriebsmotor 1 ist an dem Nabenträger 17 angeflanscht. Somit kann als Antriebsmotor 1 ein Standardmotor verwendet werden. Das innere Zentralrad 2 sowie das innere Zentralrad 6 sind fliegend gelagert. Die Lagerung 16 ist axial neben der Betätigungseinrichtung der Bremse 10 angeordnet. Dadurch ist es möglich, die erste Planetenstufe 3 und die zweite Planetenstufe 7 sowie die Bremse 10 und deren Betätigungseinrichtung in die Felge einzuschieben. Zusätzlich wird durch diese Anordnung ein geringer Abstand zwischen Felgenanflanschfläche 14 und der Lenkachse 19 erreicht, wodurch geringe Lenkkräfte zum Lenken des Radantriebs benötigt werden. Das Hohlrad 8, die Außenlamellen 12 und die Betätigungseinrichtung der Bremse 10 sowie das Hohlrad 4 und die Hülse 13 sind mit gemeinsamen Befestigungselementen 20 drehfest mit dem Nabenträger 17 verbunden. Wird der Radantrieb drucklos geschaltet oder liegt ein Defekt vor, indem z. B. ein größeres Leck bei der hydraulischen Einrichtung des Fahrzeugs vorliegt und somit die Betätigungseinrichtung des Radantriebs der Bremse nicht mehr mit Druck beaufschlagbar ist, so drückt die Federkraft der Feder 21 den Kolben 22 auf die Bremse 10 und schließt diese. Indem der Raum 23 wieder mit Druck beaufschlagt wird, bewegt sich der Kolben 22 entgegen der Federkraft der Feder 21 und öffnet die Bremse 10. Dieser Druck kann entweder über ein Ventil vom Fahrzeug zum Radantrieb gelangen oder im Falle eines Defekts von einer externen Druckmittelquelle erzeugt werden. Für die Betriebsbremse bei geöffneter Feststellbremse wird der Raum 24 mit Druck beaufschlagt und so bewegt sich der Kolben 25 in axialer Richtung und schließt die Bremse entgegen der Federkraft der Feder 26, welche sich am Kolben 22 abstützt, was zu einer kompakten Bauweise führt. Je nach Höhe des Drucks im Raum 24 wird das Bremsmoment gesteuert. Indem der Kolben 25 in radialer Richtung über dem Kolben 22 angeordnet ist, wird in axialer Richtung eine sehr kompakte Betätigungseinrichtung geschaffen. Soll bei einem Defekt der hydraulischen Einrichtung des Fahrzeugs keine externe Druckmittelquelle zum Lösen der Feststellbremse eingesetzt werden, besteht die Möglichkeit, durch Drehen einer Verschlußschraube 27 das innere Zentralrad 6 in axialer Richtung zu verschieben und die Verzahnung des inneren Zentralrades außer Eingriff zu bringen, um den Kraftfluß vom Abtrieb bzw. des Planetenträgers 9 zur Bremse 10 zu unterbrechen, so daß das Fahrzeug abgeschleppt werden kann.

### Bezugszeichen

- 1: Antriebsmotor
- 2: inneres Zentralrad
- 3: erste Planetenstufe
- 4: Hohlrad
- 5: Planetenträger
- 6: inneres Zentralrad
- 7: zweite Planetenstufe
- 8: Hohlrad
- 9: Planetenträger
- 10: Bremse
- 11: Innenlamellen
- 12: Außenlamellen
- 13: Hülse
- 14: Anflanschfläche
- 15: Felge
- 16: Lagerung
- 17: Nabenträger
- 18: Achsrohr
- 19: Lenksachse
- 20: Befestigungselement
- 21: Feder
- 22: Kolben
- 23: Raum
- 24: Raum
- 25: Kolben
- 26: Feder
- 27: Verschlußschraube

## Patentansprüche

1. Radantrieb, bei welchem ein Antriebsmotor (1) eine erste Planetenstufe (3) antreibt, welche über eine zweite Planetenstufe (7) einen Abtrieb antreibt und über eine Bremse (10), welche der zweiten Planetenstufe (7) vorgeschaltet ist, bremsbar ist, **dadurch gekennzeichnet, daß** die Bremse (10) eine Betätigungseinrichtung aufweist, welche im drucklosen Zustand eines ersten Teils (22) der Betätigungseinrichtung die Bremse (10) schließt und durch Druckbeaufschlagung eines ersten Teils (22) der Betätigungseinrichtung die Bremse (10) öffnet und durch Druckbeaufschlagung eines zweiten Teils (25) der Betätigungseinrichtung die Bremse (10) schließt.

2. Radantrieb nach Anspruch 1, **dadurch gekennzeichnet, daß** eine Betätigungseinrichtung für eine Bremse (10) außerhalb der radialen Erstreckung der ersten Planetenstufe (3) angeordnet ist.

3. Radantrieb nach Anspruch 1, **dadurch gekennzeichnet, daß** ein Antriebsmotor (1) ein inneres Zentralrad (2) der ersten Planetenstufe (3) antreibt, ein Hohlrad (4) der ersten Planetenstufe (3) drehfest gelagert ist und ein Planetenträger (5) der ersten Planetenstufe (3) das innere Zentralrad (6) der zweiten Planetenstufe (7) antreibt und mit der Bremse (10) in Verbindung steht.

4. Radantrieb nach Anspruch 1, **dadurch gekennzeichnet, daß** durch Verschieben eines inneren Zentralrades (6) in axialer Richtung eine Verbindung des Antriebsmotors (1) zum Abtrieb unterbrochen wird.

5. Radantrieb nach Anspruch 1, **dadurch gekennzeichnet, daß** eine Lagerung (16), welche mit dem Abtrieb in Verbindung steht, in axialer Richtung zwischen der ersten Planetenstufe (3) und dem Antriebsmotor (1) angeordnet ist.

6. Radantrieb nach Anspruch 2, **dadurch gekennzeichnet, daß** eine Betätigungseinrichtung der Bremse (10) in einer Hülse (13) angeordnet ist, welche mit einem Hohlrad (4) der ersten Planetenstufe (3), einem Hohlrad (8) der zweiten Planetenstufe (7), einer Bremse (10) mit einem mit einem Fahrzeug in Verbindung stehenden Nabenträger (17) drehfest in Verbindung steht.

7. Radantrieb nach Anspruch 6, **dadurch gekennzeichnet, daß** die beiden Hohlräder (4, 8) über gemeinsame Befestigungsmittel (20) mit einem Nabenträger (17) drehfest verbunden sind.

8. Radantrieb nach Anspruch 1, **dadurch gekennzeichnet, daß** der Radantrieb lenkbar ist.

9. Radantrieb nach Anspruch 1, **dadurch gekennzeichnet, daß** ein inneres Zentralrad (2) der ersten Planetenstufe (3) und ein inneres Zentralrad (6) der zweiten Planetenstufe (7) in radialer Richtung nicht gelagert sind.

10. Radantrieb nach Anspruch 1, **dadurch gekennzeichnet, daß** Planetenstufen (3, 7) und die Bremse (10) innerhalb der Erstreckung einer Felge (15) angeordnet sind.

11. Radantrieb nach Anspruch 1, **dadurch gekennzeichnet, daß** eine Anflanschfläche (14) zur Aufnahme eines Rades in axialer Richtung zwischen der Betätigungseinrichtung der Bremse und einer Lenkachse (19) angeordnet ist.

12. Radantrieb nach Anspruch 1, **dadurch gekennzeichnet, daß** ein zweites Teil (25) der Betätigungseinrichtung der Bremse (10) durch Druckbeaufschlagung in axialer Richtung entgegen einer Federkraft einer Feder (26) bewegt wird, wobei sich die Feder (26) auf dem ersten Teil (22) der Betätigungseinrichtung abstützt.

## Claims

1. Wheel drive in which a drive motor (1) drives a first planetary stage (3), which via a second planetary stage (7) drives an output and can be braked by means of a brake (10), which precedes the second planetary stage (7), **characterized in that** the brake (10) features a control device, which in the depressurized state of a first element (22) of the control device closes the brake (10) and through pressurization of a first element (22) of the control device opens the brake (10) and through pressurization of a second element (25) of the control device closes the brake (10).

2. Wheel drive according to claim 1, **characterized in that** a control device for a brake (10) is arranged outside the radial extension of the first planetary stage (3).

3. Wheel drive according to claim 1, **characterized in that** a drive motor (1) drives an inner central gear (2) of the first planetary stage (3), that a ring gear (4) of the first planetary stage (3) is nonrotationally mounted and a planetary carrier (5) of the first planetary stage (3) drives the inner central gear (6) of the second planetary stage (7) and is connected to the brake (10).

4. Wheel drive according to claim 1, **characterized in that** through displacement of an inner central gear (6) in axial direction a connection of the drive motor (1) to the output is interrupted.

5. Wheel drive according to claim 1, **characterized in that** a suspension (16), which is connected to the output, is arranged in axial direction between the first planetary stage (3) and the drive motor (1).

6. Wheel drive according to claim 2, **characterized in that** a control device of the brake (10) is arranged in a sleeve (13), which is nonrotationally connected to a ring gear (4) of the first planetary stage (3), a ring gear (8) of the second planetary stage (7), and to a brake (10) with a hub carrier (17) connected to a vehicle.

7. Wheel drive according to claim 6, **characterized in that** the two ring gears (4, 8) are nonrotationally connected to a hub carrier (17) by common fastening means (20).

8. Wheel drive according to claim 1, **characterized in that** the wheel drive is steerable.

9. Wheel drive according to claim 1, **characterized in that** an inner central gear (2) of the first planetary stage (3) and an inner central gear (6) of the second planetary stage (7) are not bearing-supported in radial direction.

10. Wheel drive according to claim 1, **characterized in that** planetary stages (3, 7) and the brake (10) are arranged within the extension of a wheel rim (15).

11. Wheel drive according to claim 1, **characterized in that** a flange face (14) for the mounting of a wheel is arranged in axial direction between the control device of the brake and a steering axle (19).

12. Wheel drive according to claim 1, **characterized in that** a second element (25) of the control device of the brake (10) is displaced by means of pressurization in axial direction against the spring force of a spring (26), with the spring (26) being supported on the first element (22) of the control device.

## Revendications

1. Entraînement de roue, dans lequel un moteur d'entraînement (1) entraîne un premier étage planétaire (3) qui, par l'intermédiaire d'un deuxième étage planétaire (7), entraîne une sortie et qui peut être freiné par l'intermédiaire d'un frein (10) qui est monté en amont du deuxième étage planétaire (7), **caractérisé en ce que** le frein (10) présente un dispositif d'actionnement qui, à l'état sans pression d'une première partie (22) du dispositif d'actionnement, ferme le frein (10) et, par une mise en pression d'une première partie (22) du dispositif d'actionnement, ouvre le frein (10) et, par une mise en pression d'une deuxième partie (25) du dispositif d'actionnement, ferme le frein (10).

2. Entraînement de roue suivant la revendication 1, **caractérisé en ce qu'**un dispositif d'actionnement d'un frein (10) est agencé à l'extérieur de l'extension radiale du premier étage planétaire (3).

3. Entraînement de roue suivant la revendication 1, **caractérisé en ce qu'**un moteur d'entraînement (1) entraîne un planétaire interne (2) du premier étage planétaire (3), **en ce qu'**une couronne (4) du premier étage planétaire (3) est supportée de manière fixe en rotation et **en ce qu'**un support planétaire (5) du premier étage planétaire (3) entraîne le planétaire interne (6) du deuxième étage planétaire (7) et est en liaison avec le frein (10).

4. Entraînement de roue suivant la revendication 1, **caractérisé en ce que**, par un déplacement d'un planétaire interne (6) en direction axiale, une liaison entre le moteur d'entraînement (1) et la sortie est interrompue.

5. Entraînement de roue suivant la revendication 1, **caractérisé en ce qu'**un agencement de palier (16), qui est en liaison avec la sortie, est disposé en direction axiale entre le premier étage planétaire (3) et le moteur d'entraînement (1).

6. Entraînement de roue suivant la revendication 2, **caractérisé en ce qu'**un dispositif d'actionnement du frein (10) est agencé dans une douille (13) qui, avec une couronne (4) du premier étage planétaire (3), une couronne (8) du deuxième étage planétaire (7), et un frein (10), est en liaison de manière fixe en rotation avec un porte-moyeu (17) qui est en liaison avec un véhicule.

7. Entraînement de roue suivant la revendication 6, **caractérisé en ce que** les deux couronnes (4, 8) sont reliées de manière fixe en rotation avec un porte-moyeu (17) par l'intermédiaire de moyens de fixation communs (20).

8. Entraînement de roue suivant la revendication 1, **caractérisé en ce que** l'entraînement de roue est dirigeable.

9. Entraînement de roue suivant la revendication 1, **caractérisé en ce qu'**un planétaire interne (2) du premier étage planétaire (3) et un planétaire interne (6) du deuxième étage planétaire (7) ne sont pas supportés en direction radiale.

10. Entraînement de roue suivant la revendication 1, **caractérisé en ce que** des étages planétaires (3, 7) et le frein (10) sont agencés à l'intérieur de l'extension d'une jante (15).

11. Entraînement de roue suivant la revendication 1, **caractérisé en ce qu'**une face de bride (14) est agencée pour recevoir une roue en direction axiale entre le dispositif d'actionnement du frein et un axe directeur (19).

12. Entraînement de roue suivant la revendication 1, **caractérisé en ce qu'**une deuxième partie (25) du dispositif d'actionnement du frein (10) est, par mise en pression, déplacée en direction axiale à l'encontre d'une force d'un ressort (26), le ressort (26) s'appuyant sur la première partie (22) du dispositif d'actionnement.
